# EUROPÄISCHE PATENTSCHRIFT

(11) **EP 0 584 730 B1**
(45) Veröffentlichungstag und Bekanntmachung des Hinweises auf die Patenterteilung: **11.06.1997**
(21) Anmeldenummer: 93113309.4
(22) Anmeldetag: 20.08.1993
(51) Int. Cl.: F24D 3/16, E04B 9/30

(54) **Verfahren zum Verkleiden einer Decke und Verkleidung nach diesem Verfahren**
Method for cladding a ceiling and cladding according to the method
Procédé pour revêtir un plafond et revêtement selon le procédé

(30) Priorität: 28.08.1992 DE 4228721
(43) Veröffentlichungstag der Anmeldung: 02.03.1994
(73) Patentinhaber: Wilhelmi Werke GmbH & Co. KG, D-35633 Lahnau (DE)
(72) Erfinder: Ruhlmann, René Philippe, F-67370 Griesheim-sur-Soufell (FR); Schmitt-Raiser, Karl-August, Dipl.-Ing., D-35579 Wetzlar 15 (DE)
(74) Vertreter: Missling, Arne, Dipl.-Ing.

(56) Entgegenhaltungen:
- EP-A- 0 320 349
- EP-A- 0 373 047
- WO-A-79/01100
- BE-A- 522 196
- CH-A- 338 946
- DE-A- 2 758 176

## Beschreibung

Die Erfindung betrifft ein Verfahren zum Verkleiden einer Decke oder eines Deckenkompartimentes eines Raumes, mit einem deckennahen Wärmetauscher zur Heizung und/oder Kühlung des Raumes, mittels einer einzigen, der zu verkleidenden Deckenkontur folgenden Kunststoffplane, die an den Wänden des Raumes spannbar ist, sowie eine Verkleidung nach diesem Verfahren.

Es ist seit langem bekannt, die Decke eines Raumes mit Hilfe geeigneter Abdeckplatten zu verkleiden. Die Platten bilden dann ein Flächenraster, das zumeist durch die zwischen den Abdeckplatten verbleibenden Fugen sichtbar ist. Zumindest bleiben Teilstücke dieser Fugen sichtbar. Es ist aber auch bereits bekannt geworden, derartige Deckenverkleidungen fugenlos anzubringen, indem eine geeignete Kunststoffplane unter die Decke gespannt wird, und zwar, indem die Kunststoffplane an ihrem Umfang in den deckennahen Wandbereichen des Raumes eingespannt wird. Dazu ist es im einzelnen bekannt, die Kunststoffplane an ihrem Umfang mit einem Verankerungskeder zu versehen, der in einer an der Wand befestigten Profilleiste einrastbar eingedrückt wird. Wird für die Kunststoffplane ein geeigneter Werkstoff verwendet, dann kann diese danach durch Erwärmung gestrafft werden (Druckschriften der Firma EXTENZO M.PHI S.A., Griesheim-sur-Souffel).

Für die Verkleidung einer Decke, die mit einem Wärmetauscher versehen ist, ist ein solches Verfahren nicht geeignet. Es ist zwar dabei auch möglich, eine Luftzirkulation oberhalb der Kunststoffplane zu gewährleisten; ein gewisser Durchhang der Kunststoffplane ist jedoch unvermeidbar und führt dazu, daß zumindest partiell unbewegte Luftschichten zwischen der Kunststoffplane und dem Wärmetauscher verbleiben, in denen der Wärmeaustausch nur langsam und unvollständig vonstatten geht. Die dadurch zu erwartende Leistungsminderung ist so groß, daß das gesamte System wirtschaftlich uninteressant ist.

Die WO-A-7 901 100 beschreibt ein Verfahren zum Verkleiden einer Decke eines Raumes mittels einer einzigen Kunststoffplane, die jedoch mit Abstand von den Akustik- und Wärme-Dämmplatten angeordnet ist.

Die Erfindung hat deshalb die Aufgabe, ein Verfahren zum Verkleiden einer Decke oder eines Deckenkompartimentes der eingangs näher bezeichneten Art sowie eine Deckenverkleidung nach diesem Verfahren so zu gestalten, daß zum einen kein Flächenraster durch sichtbare Fugen verbleibt, und daß zum anderen eine derartige fugenlose Verkleidung so verlegt wird, daß damit auch Kühl- und Heizdecken verkleidet werden können.

Erfindungsgemäß wird die Aufgabe dadurch gelöst, daß die Decke zumindest teilweise bedeckende Akustik- und/oder Wärme-Dämmplatten mittels geeigneter Aufhängung an der Decke vorgesehen werden, daß unterhalb der Akustik- und/oder Wärme-Dämmplatten der Wärmetauscher mittels an den Akustik- und/oder Wärme-Dämmplatten befestigbaren Halterungen angebracht wird, daß die Kunststoffplane dicht unterhalb des Wärmetauschers einschließlich dessen Halterungen an ihrem Umfang eingespannt und danach gestrafft wird, daß die Kunststoffplane in ihrer Fläche punktuell an den Akust- und/oder Wärme-Dämmplatten mittels Halteteilen befestigt und mindestens teilweise mit einem Spritzbelag überzogen wird. Auf diese Weise werden die oben beschriebenen Nachteile in überraschend einfacher Weise behoben. Da die Abdeckplatten nunmehr als Akustik- und/oder Wärme-Dämmplatten direkt an der Decke befestigt und nach Verspannen der Kunststoffplane überhaupt nicht mehr sichtbar sind, können sie in beliebiger Größe und Zusammenstellung ohne Rücksicht auf den Verlauf ihrer Fugen verlegt werden. Sie sorgen gleichzeitig dafür, daß die Decke gegenüber dem Deckenhohlraum isoliert ist, so daß die über den Wärmeaustauscher eingebrachte Energie vollständig dem Raum zur Vefügung steht. Da der gesamte Wärmetauscher verkleidet ist, ist die Anordnung der erforderlichen Zu- und Abführungen für das Heiz- und/oder Kühlmittel völlig freigestellt und muß sich nur oberhalb der Kunststoffplane befinden. Die sichtbare Seite der Kunststoffplane bildet eine gleichmäßige Sichtfläche ohne Fugen. Dadurch, daß für die Unterbringung des Wärmetauschers kein Mörtel erforderlich ist, treten nur ganz geringe Absorptionsverluste ein. Die Einspannung der Kunststoffplane an den Wänden wird unterstützt durch die in beliebiger Verteilung aufgebrachten Halteteile, so daß auch Kunststoff geringerer Qualität für die Kunststoffplane verwendet werden kann.

Grundsätzlich können für den Wärmetauscher beliebig geformte Rohre aus Metall oder Kunststoff verwendet werden. Es ist im einzelnen vorteilhaft, für den Wärmetauscher ein waagerecht mäandrierendes Rohr zu verwenden; es ist dabei auch möglich, daß dünne Kunststoffrohre eingesetzt werden. Es ist besonders vorteilhaft, wenn die Kunststoffplane durch thermische Behandlung gestrafft wird. Auf diese Weise ist bereits ein relativ geringer Durchhang erzielt, bevor dieser Durchhang mit Hilfe der Halteteile völlig verschwindet. Es ist dadurch möglich, daß die Kunststoffplane aus mehreren Teilstücken zusammengesetzt wird, die vor der Verlegung miteinander verschweißt oder verklebt worden sind. Die verwendete Kunststoffplane kann sichtseitig strukturiert sein, so daß sie je nach Wunsch bedruckt, eingefärbt oder beschichtet werden kann. Als Halteteile werden zweckmäßigerweise Stifte, Nägel oder dergleichen verwendet, die ohne Schwierigkeiten bei bereits verspannter Kunststoffplane durch diese hindurch in die Akustik- und/oder Wärme-Dämmplatten getrieben werden können. Schließlich ist eine völlig gleichmäßige Untersicht der Decke erzielbar, nachdem der Spritzbelag aufgebracht ist; dazu ist es zweckmäßig, diesen mit einem Zusatz wie beispielsweise Essigsäure in geeigneter Konzentration zu versehen, der geeignet ist, den Werkstoff der Kunststoffplane leicht anzulösen, so daß der Spritzbelag sicher haftet.

Die Erfindung ist weiterhin durch eine Deckenverkleidung gekennzeichnet, die nach dem vorstehend beschriebenen Verfahren angefertigt worden ist. Sie hat den großen Vorteil, daß sie größenmäßig nicht beschränkt ist, weil die verfahrensmäßig bedingten Durchhänge der Kunststoffplane ständig durch die Halteteile reduziert oder beseitigt werden. Bei entsprechender Gestaltung dieser Halteteile, insbesondere deren Köpfe, und bei einer passenden Dichte ihrer Anbringung, bezogen auf die Fläche der Decke, sind keinerlei Aufhängepunkte oder Nähte in der Untersicht der Deckenverkleidung zu sehen.

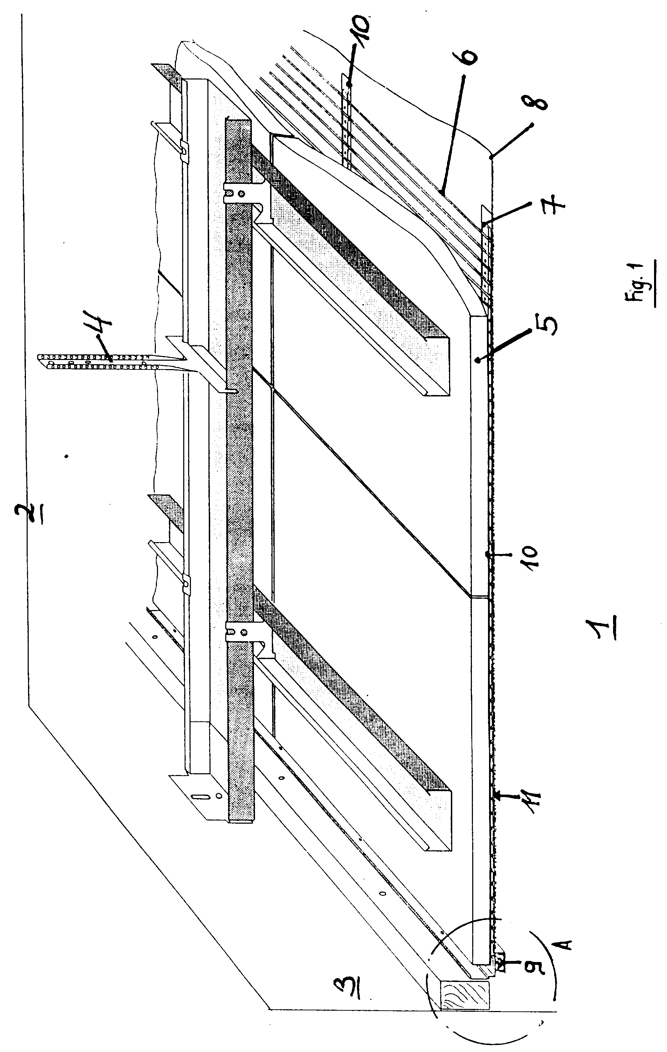

In der Zeichnung wird an einem Ausführungsbeispiel eine Deckenverkleidung schematisch gezeigt, die nach dem erfindungsgemäßen Verfahren hergestellt ist. Es zeigen
- Fig. 1: eine Deckenverkleidung in perspektivischer Ansicht und

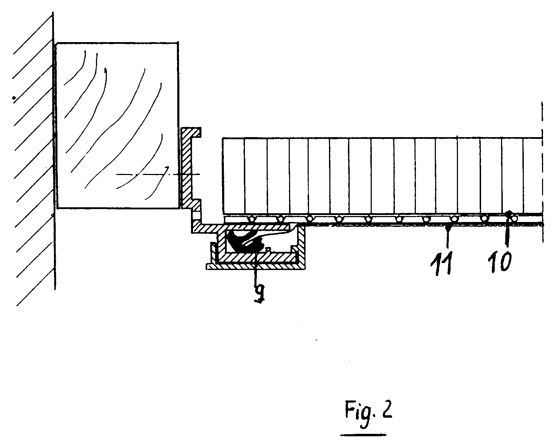

- Fig. 2: eine Einzelheit A aus Fig. 1.

In einem Raum 1 sind eine zu verkleidende Decke 2 und dessen Wände 3 angedeutet. In der Decke 2 sind Aufhängungen 4 befestigt, die zur von der Decke 2 abstandsgleichen Aufhängung mehrerer Akustik- und/oder Wärme-Dämmplatten 5 dienen, die im Normalfall die Decke 2 insgesamt bedecken. Ein Wärmetauscher 6 ist mittels geeigneter Halterungen 7 an mehreren dieser Akust- und/oder Wärme-Dämmplatten mit geringem Abstand von ihnen befestigt. Die Halterungen sind so gestaltet, daß sie zum einen den Wärmetauscher 6 ortsstabil an den Akustik- und/oder Wärme-Dämmplatten 5 befestigen. Eine Kunststoffplane 8 unterfängt alle Bauteile und wird mit ihrem Umfang 9 in geeigneter Weise, beispielsweise mittels eines Keders, ringsherum im Raum 1 an dessen Wänden 3 in geeigneten ortsfesten Leisten befestigt. Nachdem die Kunststoffplane 8 in bekannter Weise thermisch gestrafft ist, werden in ihrer Fläche Halteteile 10 angebracht, welche die Kunststoffplane 8 an die Akustik- und/oder Wärme-Dämmplatten 5 anbinden. Danach wird die gesamte Untersicht der Deckenverkleidung mit einem Spritzbelag 11 überzogen.

Als Halteteile 10 werden Stücke eines Doppelklebebandes verwendet.

## Patentansprüche

1. Verfahren zum Verkleiden einer Decke (2) oder eines Deckenkompartimentes eines Raumes, mit einem deckennahen Wärmetauscher (6) zur Heizung und/oder Kühlung des Raumes, mittels einer einzigen, der zu verkleidenden Deckenkontur folgenden Kunststoffplane (8), die an den Wänden des Raumes spannbar ist,
dadurch gekennzeichnet, daß
- die Decke (2) zumindest teilweise bedeckende Akustik- und/oder Wärme-Dämmplatten (5) mittels geeigneter Aufhängungen (4) an der Decke (2) vorgesehen werden,
- unterhalb der Akustik- und/oder Wärme-Dämmplatten (5) der Wärmetauscher (6) mittels an den Akustik- und/oder Wärme-Dämmplatten (5) befestigbaren Halterungen (7) angebracht wird,
- die Kunststoffplane (8) dicht unterhalb des Wärmetauschers (6) einschließlich dessen Halterungen (7) an ihrem Umfang (9) eingespannt und danach gestrafft wird,
- die Kunststoffplane (8) in ihrer Fläche punktuell an den Akustik- und/oder Wärme-Dämmplatten (5) mittels Halteteilen (10) befestigt und
- die Kunststoffplane (8) mindestens teilweise mit einem Spritzbelag (11) überzogen wird.

2. Verfahren nach Anspruch 1, dadurch gekennzeichnet, daß als Wärmetauscher (6) ein waagerecht mäandrierendes Rohr verwendet wird.

3. Verfahren nach Anspruch 1 oder 2, dadurch gekennzeichnet, daß als Wärmetauscher (6) dünne Kunststoffrohre verwendet werden.

4. Verfahren nach Anspruch 1, dadurch gekennzeichnet, daß die Kunststoffplane (8) durch thermische Behandlung gestrafft wird.

5. Verfahren nach Anspruch 1 oder 4, dadurch gekennzeichnet, daß die Kunststoffplane (8) aus mehreren Teilstücken zusammengesetzt wird.

6. Verfahren nach Anspruch 5, dadurch gekennzeichnet, daß die Teilstücke miteinander verschweißt oder verklebt werden.

7. Verfahren nach Anspruch 1 oder einem der Ansprüche 4 bis 6, dadurch gekennzeichnet, daß die verwendete Kunststoffplane (8) sichtseitig strukturiert ist, beispielsweise bedruckt, eingefärbt oder beschichtet.

8. Verfahren nach Anspruch 1, dadurch gekennzeichnet, daß als Halteteile (10) Stifte, Nägel oder dergleichen verwendet werden.

9. Verfahren nach Anspruch 1, dadurch gekennzeichnet, daß als Halteteile (10) Stücke eines Doppelklebebandes verwendet werden.

10. Verfahren nach Anspruch 1, dadurch gekennzeichnet, daß die Kunststoffplane (8) höchstens 5 mm von dem Wärmetauscher (6) entfernt vorgesehen ist.

11. Verfahren nach Anspruch 1, dadurch gekennzeichnet, daß der Spritzbelag (11) mit einem Zusatz versehen wird, der geeignet ist, den Werkstoff der Kunststoffplane (8) anzulösen.

12. Verfahren nach Anspruch 11, dadurch gekennzeichnet, daß als Zusatz Essigsäure in geeigneter Konzentration verwendet wird.

13. Verkleidung einer Decke oder eines Deckenkompartimentes eines Raumes, mit einem deckennahen Wärmetauscher zur Heizung und/oder Kühlung des Raumes, mittels einer einzigen, der zu verkleidenden Deckenkontur folgenden Kunststoffplane, die an den Wänden des Raumes spannbar ist, gekennzeichnet durch ihre Herstellung mittels eines Verfahrens nach einem der Ansprüche 1 bis 10.

## Claims

1. A method of cladding a ceiling (2) or a ceiling compartment of a room, with a heat exchanger (6) close to the ceiling for heating and/or cooling the room, by means of a single plastics cover (8) which follows the ceiling contour to be clad and which can be gripped on the walls of the room,
**characterized in that**
- acoustic and/or thermal-insulation panels (5) covering the ceiling (2) at least in part are provided on the ceiling (2) by means of suitable suspension means (4),
- the heat exchanger (6) is attached below the acoustic and/or thermal-insulation panels (5) by means of holding devices (7) which can be fastened to the acoustic and/or thermal-insulation panels (5),
- the plastics cover (8) is gripped on its periphery (9) closely below the heat exchanger (6) including its holding devices (7) and is then tightened,
- the plastics cover (8) is fastened point-wise over its area to the acoustic and/or thermal-insulation panels (5) by means of holding parts (10), and
- the plastics cover (8) is covered at least in part with a spray coating (11).

2. A method according to Claim 1, **characterized in that** a tube meandering horizontally is used as the heat exchanger (6).

3. A method according to Claim 1 or 2, **characterized in that** thin plastics tubes are used as the heat exchanger (6).

4. A method according to Claim 1, **characterized in that** the plastics cover (8) is tightened by heat treatment.

5. A method according to Claim 1 or 4, **characterized in that** the plastics cover (8) is formed from a plurality of parts.

6. A method according to Claim 5, **characterized in that** the parts are welded together or secured by adhesion.

7. A method according to Claim 1 or one of Claims 4 to 6, **characterized in that** the plastics cover (8) used is textured on the visible side, for example is printed, coloured or coated.

8. A method according to Claim 1, **characterized in that** pins, nails or the like are used as the holding parts (10).

9. A method according to Claim 1, **characterized in that** pieces of a two-sided adhesive tape are used as the holding parts (10).

10. A method according to Claim 1, **characterized in that** the plastics cover (8) is provided at a distance of at most 5 mm from the heat exchanger (6).

11. A method according to Claim 1, **characterized in that** the spray coating (11) is provided with an additive which is suitable for etching the material of the plastics cover (8).

12. A method according to Claim 11, **characterized in that** acetic acid in a suitable concentration is used as the additive.

13. A cladding of a ceiling or a ceiling compartment of a room, with a heat exchanger close to the ceiling for heating and/or cooling the room, by means of a single plastics cover which follows the ceiling contour to be clad and which can be gripped on the walls of the room, **characterized by** its production by means of a method according to one of Claims 1 to 10.

## Revendications

1. Procédé pour recouvrir un plafond (2) ou une partie de plafond d'une pièce présentant un échangeur de chaleur (6) proche du plafond pour chauffer et/ou refroidir la pièce, au moyen d'une bâche unique (8) en matière synthétique qui suit le contour du plafond à recouvrir et qui peut être tendue entre les murs de la pièce,
caractérisé en ce que
- des panneaux (5) acoustiques et/ou calorifuges recouvrant au moins partiellement le plafond (2) sont fixés au plafond (2) au moyen de suspensions appropriées (4),
- au-dessous des panneaux (5) acoustiques et/ou calorifuges, l'échangeur de chaleur (6) est installé au moyen de supports (7) qui peuvent être fixés aux panneaux (5) acoustiques et/ou calorifuges,
- la bâche en matière synthétique (8) est accrochée par sa périphérie (9) juste au-dessous de l'échangeur de chaleur (6), y compris ses supports (7), et ensuite tendue,
- la bâche en matière synthétique (8) est fixée ponctuellement à sa surface aux panneaux (5) acoustiques et/ou calorifuges au moyen de pièces de maintien (10) et
- la bâche en matière synthétique (8) est garnie au moins partiellement d'une couche de pulvérisation (11).

2. Procédé selon la revendication 1, caractérisé en ce que, comme échangeur de chaleur (6), on utilise un tube serpentant horizontalement.

3. Procédé selon la revendication 1 ou 2, caractérisé en ce que, comme échangeur de chaleur (6), on utilise des tubes minces en matière synthétique.

4. Procédé selon la revendication 1, caractérisé en ce que la bâche en matière synthétique (8) est tendue par un traitement thermique.

5. Procédé selon la revendication 1 ou 4, caractérisé en ce que la bâche en matière synthétique (8) est composée de plusieurs pièces.

6. Procédé selon la revendication 5, caractérisé en ce que les pièces sont soudées ou collées les unes aux autres.

7. Procédé selon la revendication 1 ou l'une des revendications 4 à 6, caractérisé en ce que la bâche en matière synthétique (8) utilisée est structurée du côté visible, par exemple imprimée, colorée ou enduite.

8. Procédé selon la revendication 1, caractérisé en ce que, comme pièces de maintien (10), on utilise des broches, des clous ou analogue.

9. Procédé selon la revendication 1, caractérisé en ce que, comme pièces de maintien (10), on utilise des morceaux de ruban à deux faces adhésives.

10. Procédé selon la revendication 1, caractérisé en ce que la bâche en matière synthétique (8) est placée à une distance maximale de 5 mm de l'échangeur de chaleur (6).

11. Procédé selon la revendication 1, caractérisé en ce que la couche de pulvérisation (11) est pourvue d'un additif apte à mordancer la matière de la bâche en matière synthétique (8).

12. Procédé selon la revendication 11, caractérisé en ce que, comme additif, on utilise de l'acide acétique en concentration appropriée.

13. Revêtement d'un plafond ou d'une partie de plafond d'une pièce présentant un échangeur de chaleur proche du plafond pour chauffer et/ou refroidir la pièce, au moyen d'une bâche unique en matière synthétique qui suit le contour du plafond à revêtir et qui peut être tendue entre les murs de la pièce, caractérisé par sa fabrication au moyen d'un procédé selon l'une des revendications 1 à 10.
